# EUROPÄISCHE PATENTSCHRIFT

(11) **EP 2 845 755 B1**
(45) Veröffentlichungstag und Bekanntmachung des Hinweises auf die Patenterteilung: **14.06.2017**
(21) Anmeldenummer: 14002468.8
(22) Anmeldetag: 16.07.2014
(51) Int. Cl.: B60J 5/06

(54) **Nutzfahrzeugaufbau mit einer Schiebeplane**
Commercial vehicle structure with a sliding tarpaulin
Véhicule utilitaire doté d'une bâche coulissante

(30) Priorität: 04.09.2013 DE 102013014629
(43) Veröffentlichungstag der Anmeldung: 11.03.2015
(73) Patentinhaber: Fahrzeugwerk Bernard Krone GmbH, 48480 Spelle (DE)
(72) Erfinder: Perk, Thorsten, 29601 Lorup (DE); Sievers, Jens, 26892 Dörpen (DE)
(74) Vertreter: Pott, Ulrich

(56) Entgegenhaltungen:
- EP-A1- 2 371 595
- WO-A1-2009/003218
- DE-B4- 10 252 461

## Beschreibung

Die Erfindung bezieht sich auf einen Nutzfahrzeugaufbau mit einem sich oberhalb eines Laderaumbodens erstreckenden Laderaumes, der bereichsweise durch zumindest eine entlang einer Führung eines Aufbauaußenbaumprofils über zumindest einen Planenroller bewegbare Schiebeplane abzuschließen und zu öffnen ist, wobei der Planenroller zumindest eine drehbare, entlang der einen Führung des Aufbauaußenbaumprofils abrollbare Laufrolle aufweist.

Nutzfahrzeugaufbauten der vorgenannten Art sind in verschiedensten Ausgestaltungen bekannt. Bei vielen Nutzfahrzeugaufbauten haben diese Vorderwände aus einem metallischen Material oder einem Kunststoffmaterial sowie Heckflügeltüren, einen Laderaumboden und obere Dachrahmenteile, auch als Außenbaumprofile bekannt, wobei zwischen seitlichen Rungen und Eckrungen bewegbare Schiebeplanen vorgesehen sind, die zur Be- und Entladung des Laderaumes aufzuschieben und dann wieder zu schließen sind. Dazu sind diese über mehrere, mit Abstand zueinander angeordnete Planenroller in oder an Führungen der Aufbauaußenbaumprofile beweglich geführt. Je nach Aufbau können beiden Seiten des Nutzfahrzeugaufbaus Schiebeplanen aufweisen. Es ist jedoch auch bekannt, nur an einer Seite derartige Schiebeplanen vorzusehen, teilweise auch nur bereichsweise.

Aus der DE 102 52 461 B4 ist ein Nutzfahrzeugaufbau der eingangs genannten Art bekannt, bei der im Dachrahmen des Nutzfahrzeugaufbaus bzw. dem Außenbaum eine Führung für den zumindest einen Planenroller vorgesehen ist, der Laufrollen aufweist. An diesem Planenroller ist die Schiebeplane befestigt, die infolge ihres Eigengewichtes an den unteren, d.h. zum Laderaumboden hin orientierten Bereichen des Außenbaumes während ihrer Schiebebewegung entlanggleiten muss. Um ein dortiges unvermeidbares Scheuern im Hinblick auf die Verschleißanfälligkeit der Plane zu vermindern, ist dort zwischen der Seitenplane und den unteren Profilbereichen des Außenbaumes eine Gleitplatte vorgesehen, die im Bedarfsfall ausgewechselt werden kann. Hierdurch soll Verschleißerscheinungen der Plane entgegen gewirkt werden. Gleichwohl geht auch mit dieser Lösung der erhebliche Nachteil einher, dass die zur Verschiebung der Seitenplane aufzubringenden Schiebekräfte erheblich sind aufgrund der zwischen der Gleitplatte bzw. der Schiebeplane und den Außenbaumprofilen vorherrschenden Reibkräfte. Dies ist nachteilig.

Aus der EP 2 371 595 A1, die als nächstliegender Stand der Technik angesehen wird, ist ein Nutzfahrzeugaufbau mit einer weiteren Laufrolle bekannt, wobei die Drehachse der einen Laufrolle gegenüber der Drehachse der weiteren Laufrolle ein anderes Winkelmaß zur Horizontalen aufweist.

Es ist Aufgabe der vorliegenden Erfindung, einen Nutzfahrzeugaufbau der eingangs genannten Art derart weiterzubilden, dass die Seitenplane mit einem verminderten Kraftaufwand zu bewegen ist, gleichwohl jedoch auch verschleißarm bewegt werden kann.

Zur Lösung dieser Aufgabe zeichnet sich der Nutzfahrzeugaufbau der eingangs genannten Art durch die zusätzlichen kennzeichnenden Merkmale des Anspruchs 1 aus. Damit ist ein Nutzfahrzeugaufbau zur Verfügung gestellt, bei dem die zumindest zwei Laufrollen aufgrund ihrer Ausrichtung der Drehachsen dafür sorgen, dass die Seitenplane ohne das Risiko von Schiebebewegungen erheblich beeinträchtigenden Reibkräften sicher an den Aufbauteilen während der Schiebebewegung entlang geführt werden kann, da aufgrund der anderen Ausrichtung der Drehachsen der Laufrollen zur Horizontalen sichergestellt ist, dass die Schiebeplane durch die Abstützung der weiteren Laufrolle an der anderen Führung des Nutzfahrzeugaufbaus ein derartiges Abstandsmaß der Schiebeplane zu den Aufbauaußenbaumprofilen aufweist, dass diese einander nicht mehr berühren bzw. nur so weit berühren, dass keine nennenswerten Reibkräfte auftreten.

Irgendwelche sonstigen Gleitplatten, die ausgewechselt werden müssen, sind nicht erforderlich. Damit ist die Schiebeplane einfach und dauerhaft über den bzw. die Planenroller mit den jeweiligen anders orientierten Laufrollen sicher und leicht beweglich geführt.

Der erfindungsgemäße Planenroller kann in besonders vorteilhafter Weise herkömmliche Planenrollen nutzen, um für den erfindungsgemäßen Nutzfahrzeugaufbau Verwendung zu finden. Dazu können herkömmliche Planenroller mit einer Laufrolle bzw. zwei oder von der Drehachse her gleich orientierten Laufrollen ergänzt werden um einen Adapter mit einer, zwei oder mehr weiteren Laufrollen, die an einer anderen Führung des Nutzfahrzeugaufbaus, insbesondere des Nutzfahrzeugaußenbaumes entlang bewegt werden können. Solche weiteren Führungen sind auch bei herkömmlichen Außenbaumprofilen vorhanden. Wesentlich ist, dass die Drehachsen der anderen Laufrollen eine derart andere Orientierung haben, dass die Plane derart nach außen ausgebaucht wird, dass sie sicher über die Außenbaumaußenprofilkontur geführt werden kann. Dazu können die Drehachsen der weiteren Laufrollen eine Orientierung zur Horizontalen haben von ≤ 90°.

Besonders bevorzugt wird, wenn dieser zusätzliche Adapter abgekröpft ausgebildet ist. Der herkömmliche Planenroller kann wie gehabt eingesetzt werden, so dass auch herkömmliche Nutzfahrzeugaufbauten nachgerüstet werden können. Dieser herkömmliche Planenroller kann wie gehabt eine entsprechende Ausnehmung aufweisen, in die beispielsweise Planenlaschen der Seitenplane eingeführt werden, so dass diese wie in herkömmlicher Weise genutzt werden können. Der herkömmliche Planenroller und der zusätzliche Adapter können dann Einsatz finden in einem Halter, der beispielsweise C-förmig im Querschnitt gestaltete Haltebereiche hat, in die sowohl der herkömmliche Planenroller als auch der Adapter eingesetzt werden. Diese können dann durch Befestigungsmittel, beispielsweise Blindniete, miteinander verbunden werden, wodurch sich ein insgesamt kostengünstig herstellbares und im Übrigen nachrüstbares Bauteil mit sicheren Funktionseigenschaften für die verschleißunanfällige und kraftschonende Beweglichkeit der Schiebeplane eines Nutzfahrzeugaufbaus ergibt. Alternativ ist es selbstverständlich ebenfalls möglich, den Planenroller insgesamt als neu gestaltetes Bauteil einteilig auszubilden mit den entsprechenden Laufrollen mit der angegebenen Drehachsenorientierung. Des Weiteren ist es möglich, an dem Außenbaum noch ein Außendichtelement, beispielsweise ein Außendichtgummielement anzubringen, das den Planenroller und damit die Laufrollen insgesamt übergreift. Dieses kann derart elastisch verformbar sein, dass es nach außen hin die montierte Seitenplane übergreift und an deren Außenseite auch während der Verschiebebewegung dichtend anliegt.

Zur weiteren Erläuterung der Erfindung wird auf weitere Unteransprüche, die nachfolgende Beschreibung und die Zeichnung verwiesen. In der Zeichnung zeigen:

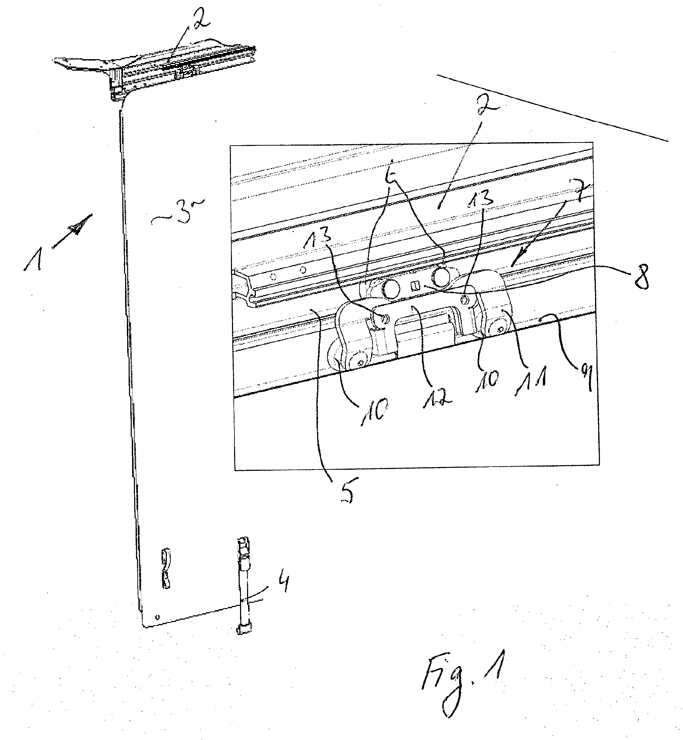

- Fig. 1: ausschnittsweise ein Ausführungsbeispiel eines Nutzfahrzeuges nach der Erfindung mit Darstellung des oberen Außenbaumes mit Seitenplane und in einem vergrößerten Ausschnitt einen in zwei Führungen des Außenbaumes geführten Planenroller;
- Fig. 2: in einer perspektivischen Darstellung ein Ausführungsbeispiel eines Planenrollers, bestehend aus einem herkömmlichen Planenrollerteil, einem Adapter und einem Halter;
- Fig. 3: das Ausführungsbeispiel nach Fig. 2 in einer anderen perspektivischen Ansicht;
- Fig. 4: eine perspektivische Einzeldarstellung des Halters des Ausführungsbeispiels nach den Fig. 2 und 3;
- Fig. 5: eine Darstellung des herkömmlichen Planenrollerteils mit dargestellter Seitenplane;
- Fig. 6: den Adapter in perspektivischer Darstellung, wie er in den Ausführungsbeispielen nach den Fig. 2 und 3 verwendet wurde, und
- Fig. 7: eine zu Fig. 5 analoge Darstellung mit Veranschaulichung der Lage der Seitenplane bei Verwendung eines erfindungsgemäßen Planenrollers.

In der Zeichnung sind gleichwirkende Teile mit übereinstimmenden Bezugsziffern versehen.

In der Zeichnung ist allgemein mit 1 ein ausschnittsweise dargestellter Nutzfahrzeugaufbau beziffert, der einen Dachrahmen bzw. oberen Außenbaum 2 aufweist, an dem eine Schiebeplane 3 seitlich geführt ist. Diese ist über Gurte 4 im unteren, d.h. in dem im Einzelnen nicht näher dargestellten Laderaumboden zugewandten Bereich über Verzurrgurte an dem Fahrzeugchassis des Nutzfahrzeugaufbaus 1 festzulegen.

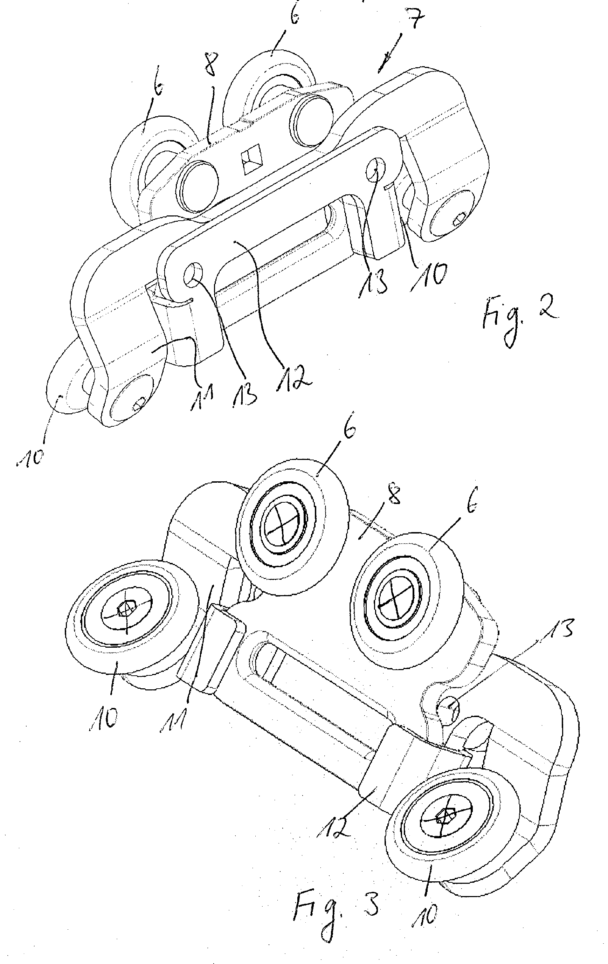

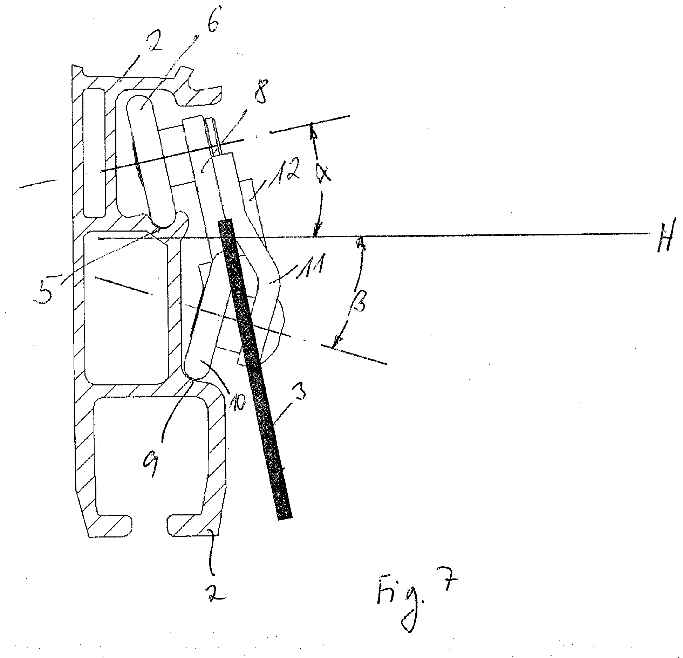

In Fig. 3 vergrößert dargestellt ist der Außenbaum 2 mit einer ersten Führung für Laufrollen 6 eines allgemein mit 7 bezifferten Planenrollers. Die Laufrollen 6 sind an einem Planenrollerteil 8 vorgesehen, das in herkömmlicher Ausbildung aufgebaut ist. An dem Außenbaum 2 ist eine weitere Führung 9 vorgesehen, an der weitere Laufrollen 10 des Planenrollers 7 abrollen. Diese Laufrollen 10 sind an einem abgekröpften Adapter 11 festgelegt, wobei das Planenrollerteil 8 und der Adapter 11 an einem gemeinsamen Halter 12 festgelegt und über Niete 13 aneinander festzulegen sind. Ersichtlich haben die Drehachsen der Laufrollen 6 und die Drehachsen der Laufrollen 10 eine andere Ausrichtung zur Horizontalen (vgl. Winkel α) und Winkel β) in Fig. 7), so dass auch die Verbindungsebene, in der die Drehachsen der Laufrollen 10 des abgekröpften Adapters 11 liegen und die Verbindungsebene, in der die Drehachsen der Laufrollen 6 des herkömmlichen Planenrollerteils 8 gelegen sind, sich schneiden, und zwar in dem vorliegenden Beispiel unter einem Winkel von ≤ 90°. Dadurch erfährt die Plane 3, wie näher aus Fig. 7 hervorgeht, eine Ausrichtung weg von der Außenkontur des Außenbaums 2, so dass diese an dem Außenbaum 2 nicht mehr scheuern kann und mithin leicht bewegbar ist.

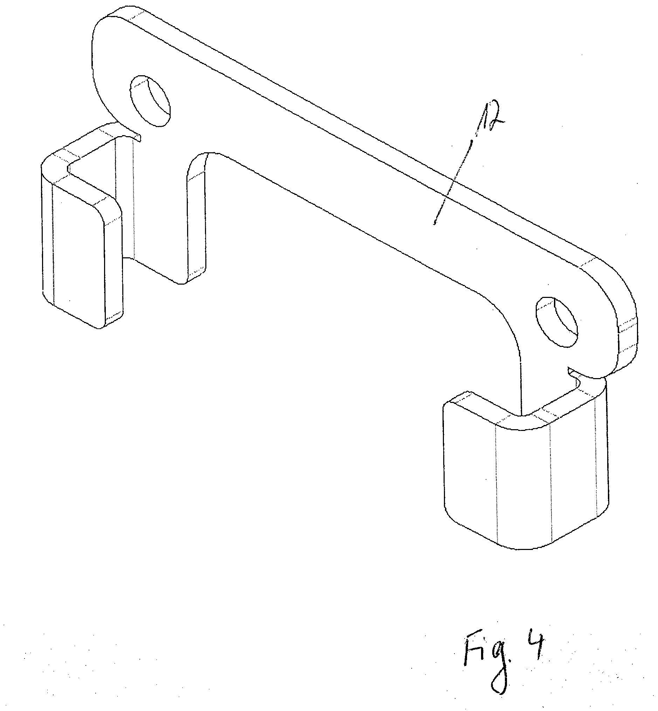

In den Fig. 2 und 3 ist der Planenroller 7 als dreiteiliges Bauteil näher veranschaulicht. Ersichtlich sind die Laufrollen 10 von den Drehachsen her anders orientiert. Die andere Orientierung ist relativ einfach dadurch zu bewerkstelligen, indem der Adapter 11 abgekröpft ausgebildet ist. Der Halter 12 weist im Querschnitt C-förmige Seitenbereiche auf, die sowohl das herkömmliche Plattenrollerteil 8 als auch den Adapter 11 umgreifen, wie aus der Einzelteildarstellung des Halters 12 nach Fig. 4 auch näher hervorgeht.

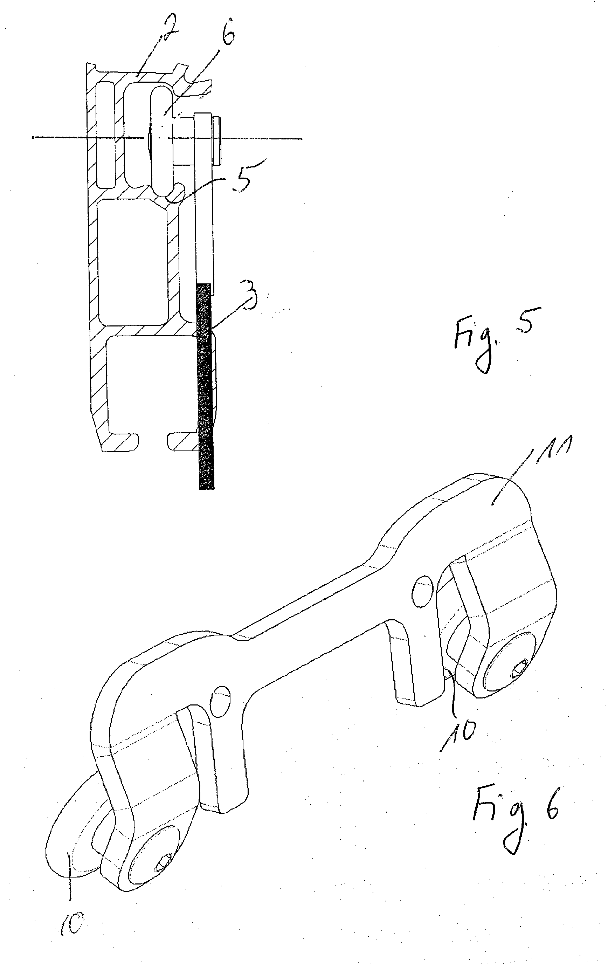

In Fig. 5 ist noch einmal der Außenbaum 2 mit den Rollen 6 gezeigt und die Plane 3 in herkömmlicher Ausrichtung. Ersichtlich ist, dass infolge der Schwerkraft und der Ausrichtung der Drehachse der Laufrolle 6 die Plane 3 an dem Außenbereich des Außenbaumes 2 scheuern muss.

Fig. 6 veranschaulicht noch einmal den Adapter 11 gemäß den Ausführungsbeispielen nach den Fig. 2 und 3. Fig. 7 zeigt eine zu Fig. 5 analoge Darstellung unter Verwendung der Teile 8, 11 und 12, wie sie in dem Ausführungsbeispiel nach den Fig. 2 und 3 gezeigt sind. Die Rollen 6 laufen in der Führung 5 und die Rollen 10 in der Führung 9 des Außenbaums 2. Die Drehachsen haben die Orientierung zur Horizontalen H, wie sie die unter dem Winkel α) und β) in Fig. 7 eingezeichnet sind. Es ist ersichtlich, dass die Schiebeplane 3 durch die Drehachsenorientierung der Laufrollen 6 und 10 so weit von der Außenkontur des Außenbaumes 2 weg geführt ist, dass es dort nicht mehr zu Scheuererscheinungen kommen kann.

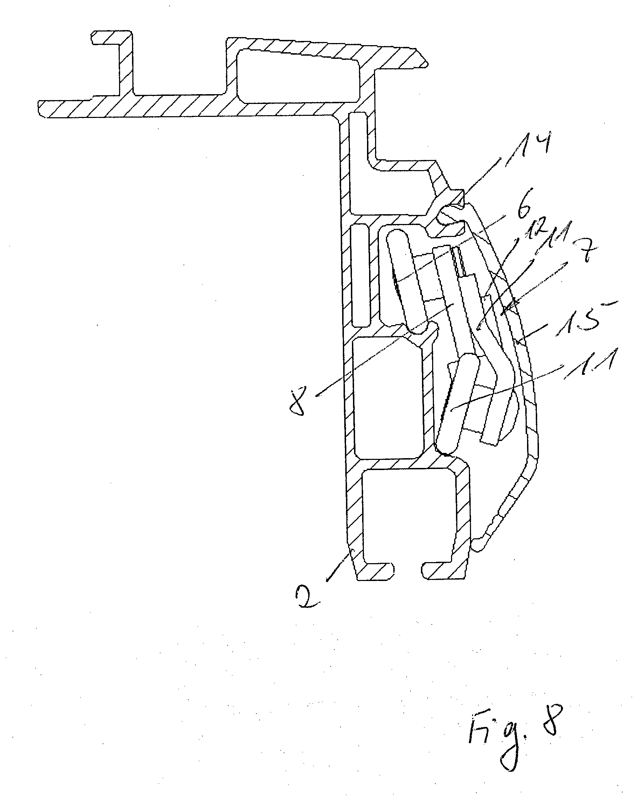

Fig. 8 zeigt noch ein weiteres Ausführungsbeispiel, wobei der Außenbaum 2 eine Aufnahme 14 zur Anordnung eines Dichtelementes 15 aufweist. Diese kann sich elastisch an die Außenhaut der Plane 3 anlegen.

## Patentansprüche

1. Nutzfahrzeugaufbau (1) mit einem sich oberhalb eines Laderaumbodens erstreckenden Laderaumes, der bereichsweise durch zumindest eine entlang einer Führung (5) und eines Aufbauaußenbaumprofils (2) über zumindest einen Planenroller (7) bewegbare Schiebeplane (3) abzuschließen und zu öffnen ist, wobei der Planenroller (7) zumindest eine drehbare, entlang der Führung (5) des Aufbauaußenbaumprofils (2) abrollbare Laufrolle (6) aufweist und wobei der Planenroller (7) zusätzlich zu der entlang der Führung (5) und des Aufbauaußenbaumprofils (2) abrollbaren Laufrolle (6) zumindest eine weitere, an einer weiteren Führung (9) des Nutzfahrzeugaufbaus abrollbare Laufrolle (10) aufweist, **dadurch gekennzeichnet, dass** die Drehachse der einen Laufrolle und die Drehachse der weiteren Laufrolle (10) eine andere Ausrichtung zur Horizontalen aufweist, wobei die Drehachse der weiteren Laufrolle (10) ein Winkelmaß (β) zur Horizontalen von < 90° hat, wobei das Winkelmaß (α) und das Winkelmaß (β) der Drehachsen der Laufrollen (6 und 10) derart aufeinander abgestimmt sind, dass sich die Drehachsen der Laufrollen (6 und 10) unter einem spitzen Winkel schneiden.

2. Nutzfahrzeugaufbau nach Anspruch 1, **dadurch gekennzeichnet, dass** der Planenroller (7) zur Führung entlang der einen Führung (5) des Aufbauaußenbaumprofils (2) zwei mit Abstand zueinander angeordnete abrollen Laufrollen (6) aufweist und zur Führung an der weiteren Führung (9) des Nutzfahrzeugaufbaus (1) zwei weitere, mit Abstand zueinander angeordnete Laufrollen (10) hat, wobei die Verbindungsebene, in der die Drehachsen der Laufrollen (6) der entlang der einen Führung (5) des Aufbauaußenbaumprofils (2) abrollbaren Laufrollen (6) die Verbindungsebene, in der die Drehachsen der anderen beiden Laufrollen (10) gelegen ist, schneidet.

3. Nutzfahrzeugaufbau nach Anspruch 2, **dadurch gekennzeichnet, dass** sich die Verbindungsebenen unter einem Winkel von ≤ 90° schneiden.

4. Nutzfahrzeugaufbau nach einem der Ansprüche 1 bis 3, **dadurch gekennzeichnet, dass** sowohl die eine Führung (5) für die zumindest eine Laufrolle (6) als auch die andere Führung (9) für die zumindest andere Laufrolle (10) in dem Aufbauaußenbaumprofil (2) ausgebildet sind.

5. Nutzfahrzeugaufbau nach einem der Ansprüche 1 bis 4, **dadurch gekennzeichnet, dass** der Planenroller (7) zumindest dreiteilig ausgebildet ist mit einem Planenrollerteil (8) mit zumindest einer Laufrolle (6) zum Abrollen an der einen Führung (5) des Aufbauaußenbaumprofils (2) und mit einem Adapter (11) mit zumindest einer weiteren Laufrolle (10) zum Abrollen an der weiteren Führung (9) des Nutzfahrzeugaufbaus (2), wobei das Planenrollerteil (8) und der Adapter (11) über einen gemeinsamen Halter (12) aneinander festlegbar sind.

6. Nutzfahrzeugaufbau nach Anspruch 5, **dadurch gekennzeichnet, dass** der Halter (12) für den Planenrollerteil (8) und für den Adapter (11) eine im Wesentlichen C-förmig im Querschnitt gestaltete Halteraufnahme für das Planenrollerteil (8) und für den Adapter (11) aufweist.

7. Nutzfahrzeugaufbau nach Anspruch 5 oder 6, **dadurch gekennzeichnet, dass** der Halter (12), das Planenrollerteil (8) und der Adapter (11) über zumindest ein Befestigungsmittel (13) aneinander festlegbar sind.

8. Nutzfahrzeugaufbau nach Anspruch 7, **dadurch gekennzeichnet, dass** das Befestigungsmittel (13) als Blindniet ausgebildet ist.

9. Nutzfahrzeugaufbau nach einem der Ansprüche 5 bis 8, **dadurch gekennzeichnet, dass** das Planenrollerteil (8) eine Aufnahme zur Anordnung einer Schiebeplanenlasche aufweist.

10. Nutzfahrzeugaufbau nach einem der Ansprüche 1 bis 4, **dadurch gekennzeichnet, dass** der Planenroller (7) mit seinen Laufrollen (6, 10) einstückig ausgebildet ist.

11. Nutzfahrzeugaufbau nach einem der Ansprüche 1 bis 10, **dadurch gekennzeichnet, dass** an dem Außenbaumprofil (2) eine Aufnahme (14) zur Anordnung eines Außenbaumdichtigungselementes (15) vorgesehen ist, welches im montierten Zustand der Teile den Planenroller (7) mit seinen Laufrollen (6, 10) nach außen hin übergreift.

12. Nutzfahrzeugaufbau nach Anspruch 11, **dadurch gekennzeichnet, dass** die Außenbaumdichtung (15) im montierten Zustand der Teile elastisch verformbar an der Außenseite der Seitenplane (3) anliegt.

## Claims

1. Commercial vehicle structure (1) comprising a cargo space extending above a cargo space floor, which space can be closed and opened, in regions, by at least one sliding tarpaulin (3) which can be moved along a guide (5) and a structural external beam profile (2) by means of at least one tarpaulin roller unit (7), the tarpaulin roller unit (7) comprising at least one rotatable roller (6) which can be rolled along the guide (5) of the structural external beam profile (2) and the tarpaulin roller unit (7) comprising at least one additional roller (10) which, in addition to the roller (6) which can be rolled along the guide (5) and the structural external beam profile (2), can be rolled along an additional guide (9) of the commercial vehicle structure,
**characterised in that** the axis of rotation of one roller and the axis of rotation of the additional roller (10) have different orientations relative to the horizontal, the axis of rotation of the additional roller (10) having an angular measure (β) of < 90° relative to the horizontal, the angular measure (α) and the angular measure (β) of the axes of rotation of the rollers (6 and 10) being coordinated such that the axes of rotation of the rollers (6 and 10) intersect at an acute angle.

2. Commercial vehicle structure according to claim 1, **characterised in that** the tarpaulin roller unit (7) comprises two mutually spaced rollers (6) that can be rolled for being guided along the one guide (5) of the structural external beam profile (2) and two additional mutually spaced rollers (10) for being guided on the additional guide (9) of the commercial vehicle structure (1), the connecting plane in which the axes of rotation of the rollers (6) of the rollers (6) that can be rolled along the one guide (5) of the structural external beam profile (2) are located intersecting the connecting plane in which the axes of rotation of the other two rollers (10) are located.

3. Commercial vehicle structure according to claim 2, **characterised in that** the connecting planes intersect at an angle of ≤ 90°.

4. Commercial vehicle structure according to any of claims 1 to 3, **characterised in that** both the one guide (5) for the at least one roller (6) and the other guide (9) for the at least one other roller (10) are formed in the structural external beam profile (2).

5. Commercial vehicle structure according to any of claims 1 to 4, **characterised in that** the tarpaulin roller unit (7) is designed to have at least three parts, comprising a tarpaulin roller unit part (8) having at least one roller (6) for being rolled on the one guide (5) of the structural external beam profile (2) and comprising an adapter (11) having at least one additional roller (10) for being rolled on the additional guide (9) of the commercial vehicle structure (2), it being possible to secure the tarpaulin roller unit part (8) and the adapter (11) to one another by means of a common holder (12).

6. Commercial vehicle structure according to claim 5, **characterised in that** the holder (12) for the tarpaulin roller unit part (8) and for the adapter (11) has, when viewed in cross section, a substantially C-shaped holder receptacle for the tarpaulin roller unit part (8) and for the adapter (11).

7. Commercial vehicle structure according to either claim 5 or claim 6, **characterised in that** the holder (12), the tarpaulin roller unit part (8) and the adapter (11) can be secured to one another by means of at least one fastening means (13).

8. Commercial vehicle structure according to claim 7, **characterised in that** the fastening means (13) is a blind rivet.

9. Commercial vehicle structure according to any of claims 5 to 8, **characterised in that** the tarpaulin roller unit part (8) has a receptacle for arranging a sliding tarpaulin clip.

10. Commercial vehicle structure according to any of claims 1 to 4, **characterised in that** the tarpaulin roller unit (7) is integral with the rollers (6, 10) thereof.

11. Commercial vehicle structure according to any of claims 1 to 10, **characterised in that** a receptacle (14) for arranging an external beam sealing element (15) is provided on the external beam profile (2), which element engages outwardly over the tarpaulin roller unit (7) and the rollers (6, 10) thereof when the parts are assembled.

12. Commercial vehicle structure according to claim 11, **characterised in that**, when the parts are assembled, the external beam sealing (15) is elastically deformable on the outside of the side tarpaulin (3).

## Revendications

1. Structure de véhicule utilitaire (1) comprenant un espace de chargement qui s'étend au-dessus du plancher de l'espace de chargement et qui peut être ouvert et fermé par endroits au moyen d'au moins une bâche coulissante (3) mobile le long d'un guide (5) et d'une bôme extérieure profilée(2) par l'intermédiaire d'au moins un coulisseau à galets (7) de la bâche, le coulisseau à galets (7) de la bâche comportant au moins un galet de roulement (6) rotatif apte à rouler le long du guide (5) de la bôme extérieure profilée (2) de la structure et le coulisseau à galets (7) de la bâche comportant, en plus du galet de roulement (6) apte à rouler le long du guide (5) et de la bôme extérieure profilée (2) de la structure, au moins un autre galet de roulement (10) apte à rouler sur un autre guide (9) de la structure de véhicule utilitaire (10), **caractérisée en ce que** l'axe de rotation d'un premier galet de roulement et l'axe de rotation de l'autre galet de roulement (10) présente une orientation différente de l'horizontale, l'axe de rotation de l'autre galet de roulement (10) forme par rapport à l'horizontale un angle (β) < 90°, l'angle (α) et l'angle (ß) des axes de rotation des galets de roulement (6 et 10) étant adaptés l'un à l'autre de telle sorte que les axes de rotation des galets de roulement (6 et 10) se coupent en formant un angle aigu.

2. Structure de véhicule utilitaire selon la revendication 1, **caractérisée en ce que** le coulisseau à galets (7) de la bâche comprend deux galets de roulements (6) disposés à distance l'un de l'autre pour effectuer le guidage le long d'un premier guide (5) de la bôme extérieure profilée (2) de la structure et comporte deux autres galets de roulement (10) disposés à distance l'un de l'autre pour effectuer le guidage sur l'autre guide (9) de la structure de véhicule utilitaire (1), le plan de liaison dans lequel les axes de rotation des galets de roulement (6) aptes à rouler le long d'un premier guide (5) de la bôme extérieure profilée (2) de la structure coupe le plan de liaison dans lequel se trouvent les axes de rotation des deux autres galets de roulement (10).

3. Structure de véhicule utilitaire selon la revendication 2, **caractérisée en ce que** les plans de liaison se coupent en formant un angle ≤ 90°.

4. Structure de véhicule utilitaire selon l'une des revendications 1 à 3, **caractérisée en ce qu'**un premier guide (5) destiné à l'au moins un galet de roulement (6) et l'autre guide (9) destiné à l'au moins un autre galet de roulement (10) sont formées dans la bôme extérieure profilée (2) de la structure.

5. Structure de véhicule utilitaire selon l'une des revendications 1 à 4, **caractérisée en ce que** le coulisseau à galets (7) de la bâche est formé d'au moins trois parties incluant un élément (8) du coulisseau à galets de la bâche muni d'au moins un galet de roulement (6) destiné à rouler sur un premier guide (5) de la bôme extérieure profil (2) de la structure, et un adaptateur (11) muni d'au moins un autre galet de roulement (10) destiné à rouler sur l'autre guide (9) de la structure de véhicule utilitaire (2), l'élément (8) du coulisseau à galets de la bâche et l'adaptateur (11) pouvant être fixés l'un à l'autre par le biais d'un support commun (12).

6. Structure de véhicule utilitaire selon la revendication 5, **caractérisée en ce que** le support (12) destiné à l'élément (8) du coulisseau à galets de la bâche et à l'adaptateur (11) comporte un logement de support, sensiblement en forme de C en coupe transversale, qui est destiné à l'élément (8) du coulisseau à galets de la bâche et à l'adaptateur (11).

7. Structure de véhicule utilitaire selon la revendication 5 ou 6, **caractérisée en ce que** le support (12), l'élément (8) du coulisseau à galets de la bâche et l'adaptateur (11) sont fixés les uns aux autres par l'intermédiaire d'au moins un moyen de fixation (13).

8. Structure de véhicule utilitaire selon la revendication 7, **caractérisée en ce que** le moyen de fixation (13) est réalisé sous forme d'un rivet aveugle.

9. Structure de véhicule utilitaire selon l'une des revendications 5 à 8, **caractérisée en ce que** l'élément (8) du coulisseau à galets de la bâche comporte un logement destiné à la mise en place d'une attache de bâche coulissante.

10. Structure de véhicule utilitaire selon l'une des revendications 1 à 4, **caractérisée en ce que** le coulisseau à galets (7) de la bâche est formé d'une seul pièce avec ses galets de roulement (6, 10).

11. Structure de véhicule utilitaire selon l'une des revendications 1 à 10, **caractérisée en ce qu'**il est prévu sur la bôme extérieure profilée (2) un logement (14) destiné à la mise en place d'un élément d'étanchéité (15) de la bôme extérieure qui s'engage vers l'extérieur à l'état assemblé des parties du coulisseau à galets (7) muni de ses galets de roulement (6, 10).

12. Structure de véhicule utilitaire selon la revendication 11, **caractérisée en ce que** le joint d'étanchéité (15) de la bôme extérieure vient en appui, de façon déformable élastiquement, sur le côté extérieur de la bâche latérale (3) à l'état assemblé des pièces.
